# EUROPEAN PATENT APPLICATION

(11) **EP 4 596 228 A1**
(43) Date of publication of application: **06.08.2025**
(21) Application number: 24220510.2
(22) Date of filing: 17.12.2024
(51) Int. Cl.: B31F 1/28

(54) **IN-LINE CORRUGATED CARDBOARD LAMINATING PLANT**

(30) Priority: 18.12.2023 IT 202300026979
(71) Applicant: FOSBER S.p.A., 55060 Pescaglia (LU) (IT)
(72) Inventor: IMPOSTI, Marco, I-55012 Capannori (LU) (IT); RUBERTI, Sauro, I-55041 Camaiore (LU) (IT)
(74) Representative: Dragotti & Associati S.R.L.

(57) **Abstract**

An in-line corrugated cardboard plant comprises a first corrugating group (10) adapted to form a first cannete (C1), a second corrugating group (20) adapted to form a second canneté (C2), a laminating machine (50) comprising a magazine (52) of laminated sheets (51), and a coupling unit (60) for coupling the laminated sheets (51), adapted to couple the laminated sheets (51) to one or more of the cannetes (C1, C2) so as to form a laminated corrugated cardboard. The plant comprises a gluing unit (30) and a double backer unit (40) arranged downstream of the two corrugating groups (10, 20) and upstream of the laminating machine (30) with respect to a direction of movement (F) along a longitudinal direction (X-X) in which the cannetés (C1, C2) are moved.

## Description

The present invention relates to the sector of plants for the production of single-wave or double-wave corrugated cardboard and has been developed with particular regard to an in-line corrugated cardboard laminating plant.

The laminating plants of the known type usually comprise a laminating machine particularly suitable for coupling a laminated sheet to a single-wave or double-wave corrugated cardboard.

Typically, the in-line laminating machines, namely machines forming part of a cardboard production plant, receive at least one sheet of continuous composite cardboard, referred to as "cannet6", composed of a web of corrugated (wavy) paper joined to a flat paper web (cover). The laminating machine also comprises a gluer, a trimming device and a cutting device. The gluer applies an adhesive substance, typically vinyl-type glue, onto the wave crests so as to allow the subsequent gluing of the cannet6 together with the laminated sheet. Subsequently, the trimming and cutting devices trim and cut the cardboard, formed by the cannet6 and the laminated sheet, to dimensions corresponding to the dimensions of the desired laminated cardboard. See, for example, the document DE10331357A1.

In the case of production of a laminated corrugated cardboard composed of a double-wave corrugated cardboard, the laminating machines receive two cannetés and comprise two gluers. A first canneté reaches a first gluer which applies an adhesive substance, typically a vinyl-type glue, onto the wave crests of the first canneté so as to allow the coupling, by means of gluing, of the first cannet6 to the cover of the second canneté. Then a second cannet6 encounters the first canneté and its bottom cover comes into contact with the glue deposited beforehand on the wave crests of the first cannete, forming a double-wave canneté. Then, both the coupled cannetés pass inside a second gluer where an adhesive substance, typically a vinyl glue, is applied onto the wave of the second cannet6 so as to allow the subsequent gluing of the double-wave canneté to the laminated sheet.

So that the layers of the two cannetés have the same width and are aligned, in the laminating machine there are at least two cutting and trimming units, one for each canneté, with associated waste material removal system, and at least two paper alignment systems.

One of the main problems of these types of in-line laminating plants consists in the use of the vinyl-type glue for joining the first canneté to the second canneté. The vinyl glue allows gluing of the paper in a "cold" condition, namely at a low temperature, for example at room temperature, but requires a predetermined period of time in order to allow the complete adhesion of the waves of the first canneté to the cover of the second canneté.

Owing to this fact, the various layers of paper to be coupled together must all be kept at the same speed until the coupling process has been completed since any - even slight - difference could result in relative slipping of the various layers which would negatively affect the cohesion and subsequently the frontal alignment.

In order to obtain identical speeds and prevent slipping, in the sector various additional elements are used, although these complicate significantly the laminating machine and the production process, resulting in the need to carry out a series of "adjustments" which must be repeated often also when three is change of machined product.

A second important problem consists in the fact that the various layers of paper must be aligned also laterally so as to ensure that the laminated sheet is correctly applied. It is therefore indispensable for the two cannetés to be each trimmed to size before the gluing step and for them to be then kept perfectly aligned during the entire process.

Numerous experiments carried out by the Proprietor have shown that there exists the need to overcome these problems in order to allow simplification of the existing in-line corrugated cardboard laminating plants and, at the same time, improve the characteristics of the laminated corrugated cardboard produced by the plant.

Another requirement identified is the need to reduce the paper passage time, simplifying these operations and reducing the complexity of these operations. These requirements are satisfied by the characteristic features of the invention illustrated in the independent claim. The dependent claims define preferred and/or particularly advantageous features of the invention.

It is understood that elements and characteristics of one embodiment may be incorporated in other embodiments without further clarifications.

Reference will now be made in detail to the various embodiments of the invention, with particular reference to the attached figures, in which:
- Figure 1 is an overall view of the in-line corrugated cardboard laminating plant according to the present invention;

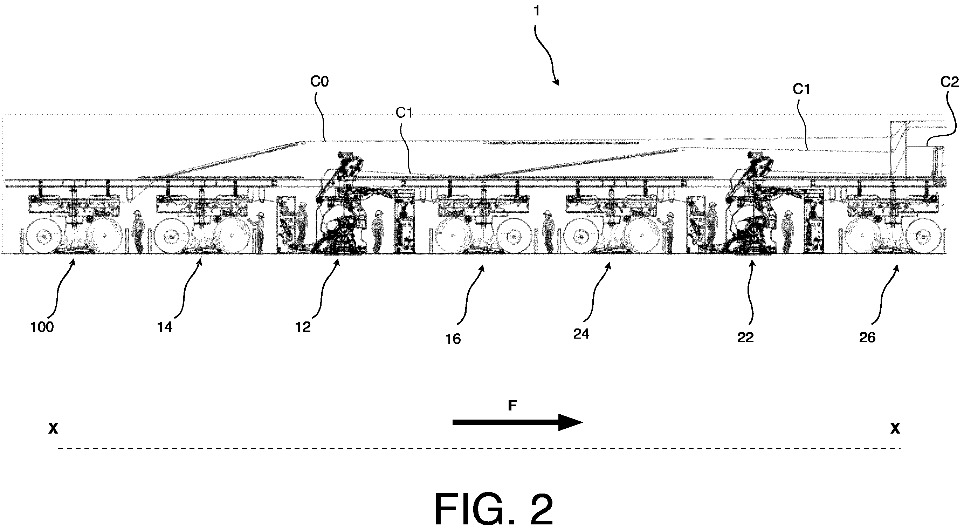

- Figure 2 is a view of a first part of the plant of Figure 1 comprising the corrugating groups;

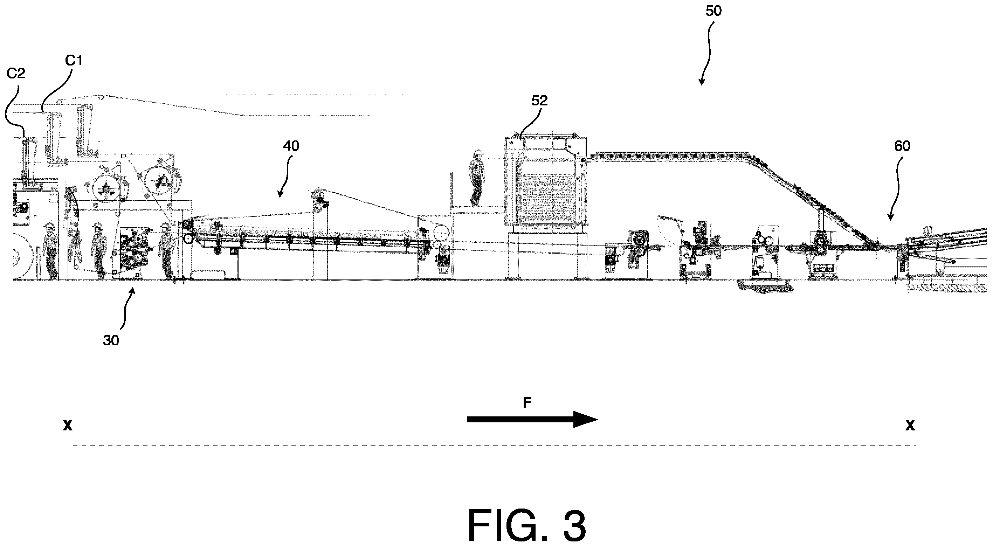

- Figures 3 is a view of a second part of the plant of Figure 1 comprising a double backer unit and a laminating machine;
- Figures 4a to 4d are different embodiments of use of the gluing unit according to the present invention;
- Figure 5 is a view of the laminating machine shown in Figures 1 and 3; and
- Figure 6a is a simplified view of a double-wave laminated corrugated cardboard according to the prior art;
- Figure 6b is a simplified view of a double-wave laminated corrugated cardboard according to the present invention;
- Figure 7 is a plan view of a longitudinal cutting unit according to the present invention; and
- Figure 8 is an overall view of a further embodiment of the in-line corrugated cardboard laminating plant.

Each example is provided merely by way of illustration of the invention and is understood as not being a limitation thereof. For example, the technical characteristics shown or described since they form part of one embodiment may be integrated within, or associated with, other embodiments in order to produce a further embodiment. It is understood that the present invention will be inclusive of these modifications and variants.

An in-line corrugated cardboard production plant according to the present invention, which is generally denoted by 1, comprises a plurality of machining devices and/or stations and/or operating units arranged in succession and aligned along a longitudinal direction X-X, wherein the material is moved in a first direction of movement F along said longitudinal direction X-X.

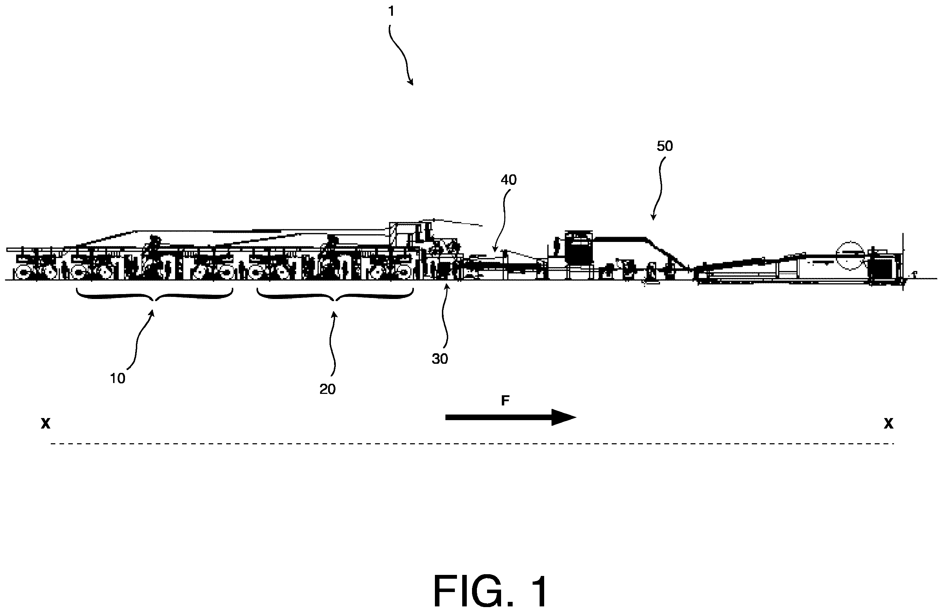

With particular reference to Figure 1, the in-line laminating plant 1 comprises a first corrugating group 10, comprising a corrugator 12, and a plurality of continuous paper web magazines 14, 16. A first magazine 14 comprises a reel of continuous paper web particularly suitable for forming a corrugated web. A second magazine 16 comprises a reel of continuous paper web particularly suitable for being coupled to the corrugated web.

The corrugator 12 comprises a pair of corrugating rollers suitable for forming the corrugated web, a gluing station for applying an adhesive substance, preferably a starch-based glue, onto the crests of the waves formed on the corrugated sheet, and a presser element for favouring adhesion of the flat sheet together with the corrugated sheet.

The corrugating group 10 is therefore intended to form a canneté C1, namely a composite sheet composed of a corrugated sheet joined together with a corresponding flat sheet.

According to this embodiment, the corrugating group 10 is configured and/or arranged so that the canneté C1 output from the corrugator 12 has the waves arranged upwardly. For example, the corrugating group 10 may comprise one or more deviators, for example one or more diverter rollers for deviating the cannet6 C1 in such a way that the cannet6 C1 is transported in the plant with the waves arranged upwardly.

The in-line laminating plant 1 comprises a second corrugating group 20, comprising a corrugator 22, and a plurality of continuous paper web magazines 24, 26. A first magazine 24 comprises a reel of continuous paper web particularly suitable for forming a corrugated web. A second magazine 26 comprises a reel of continuous paper web particularly suitable for being coupled to the corrugated web.

The corrugator 22 comprises a pair of corrugating rollers suitable for forming the corrugated web, a gluing station for applying an adhesive substance, preferably a starch-based glue, onto the crests of the waves formed on the corrugated sheet, and a presser element for favouring adhesion of the flat sheet together with the corrugated sheet.

The corrugating group 20 is therefore intended to form a second cannet6 C2, namely a composite sheet composed of a corrugated sheet joined together with a corresponding flat sheet.

According to this embodiment, the corrugating group 20 is configured and/or arranged so that the cannet6 C2 output from the corrugator 22 has the waves arranged upwardly. For example, the corrugating group 20 may comprise one or more deviators, for example one or more diverter rollers for deviating the canneté C2 in such a way that the canneté C2 is transported in the plant with the waves arranged upwards.

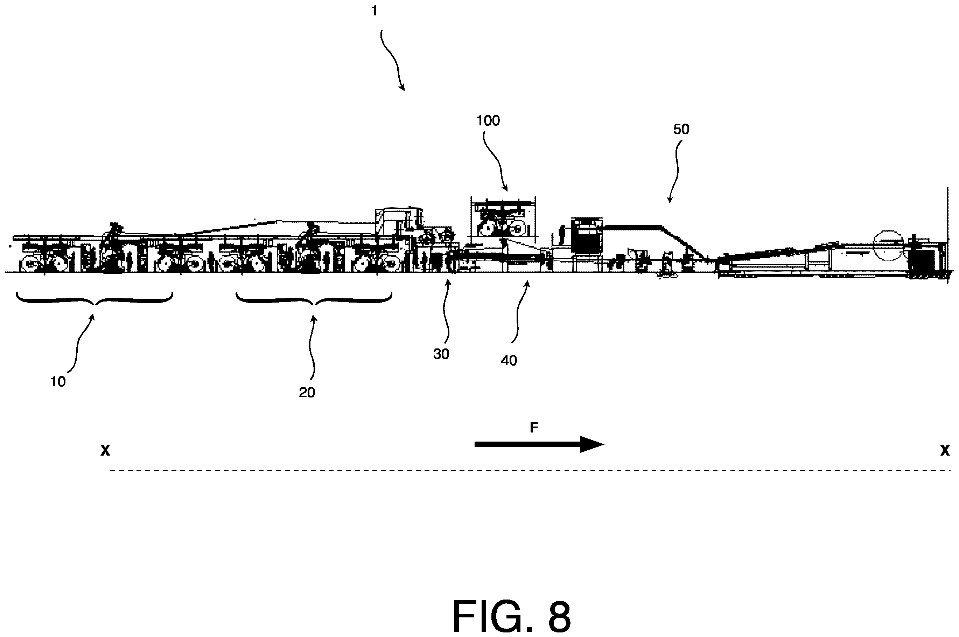

The in-line laminating plant 1 further comprises a further continuous paper web magazine 100, for example, a reel of continuous paper web suitable for forming a cover C0 to be associated with a cardboard web formed by a single canneté C1, C2 or with a cardboard web formed by a pair of cannetés C1, C2 glued together, as will become clearer below. In the embodiment shown in Figure 1, the magazine for covers C0 is arranged upstream of the first corrugating group, but different arrangements are also possible along the laminating plant 1, as, for example, in the embodiment shown in Figure 8, where the cover magazine 100 is arranged in an elevated position with respect to the other units of the laminating plant 1.

The in-line laminating plant 1 comprises a laminating machine 50 suitable for joining laminated sheets to one or more sheets of canneté C1, C2 for forming a laminated corrugated cardboard.

The in-line laminating plant 1 according to the present invention also comprises a gluing unit 30 and a double backer unit 40, both arranged downstream of the two corrugating groups 10, 20 and upstream of the laminating machine 50 in the direction of movement F along the longitudinal direction X in which the material is moved.

The gluing unit 30, arranged upstream of the double backer units 40, for example close to inlet of the double backer unit 40, has the function of depositing on the crests of the waves of a canneté C1, C2, coming from the corrugating groups, a thin and uniform layer of adhesive substance for allowing the adhesion of a first cannet6 C1 to a second cannet6 C2, or the adhesion of a canneté C1, C2 to a paper or cover web C0. As will emerge more clearly below, the gluing unit 30 may be composed of one or two levels so as to allow the production of a single-wave or double-wave cardboard web; each level deals with the application of the glue onto the crests of a respective cannet6 C1, C2.

As mentioned above, the configuration and/or the arrangement of the corrugating groups 10, 20 is/or such that at least one of the cannetés C1, C2, at least in an adjacent position upstream of the gluing unit 30, has the waves arranged upwardly.

According to the embodiment shown in the figures, the gluing unit 30 comprises a first gluing device 32 inside which the first canneté C1 supplied from the first corrugating group 10 may pass, and a second gluing device 34 inside which the second cannet6 C2 supplied from the second corrugating group 20 may pass.

The cannetés C1, C2 are inserted into the gluing unit 30 in such a way that, both at the inlet and at the outlet of the gluing devices 32, 34, their waves are arranged upwardly.

The distribution of the glue takes place by means of the passage of the cannet6 C1, C2 through a gluing cylinder and a pressing cylinder. The latter exerts a light pressure on the cannet6 on the cover side so as to bring the crests into contact with the gluing cylinder which applies a uniform dose of adhesive substance.

With reference to the embodiment shown in the attached figures, each of the gluing devices 32, 34 comprises a reservoir of adhesive substance, preferably a starch-based glue, and at least one gluing cylinder 31 designed, during use, to remove the glue from the reservoir and distribute a layer of glue on top of the crests of the waves of the respective canneté C1, C2.

Each gluing device 32, 34 comprises a diverter roller 33 fixed to a support arm 35. The arm 35 is engaged movably with the gluing device 32, 34 in such a way that the diverter roller 33 is selectively movable towards and away from the gluing cylinder 31. According to this configuration, the diverter roller 33 may assume a rest position, where the diverter roller 33 is arranged at a distance from the gluing cylinder 31, and may assume an operating position, where the diverter roller 33 is arranged close to the gluing cylinder 31. In the rest position the canneté C1, C2 which passes above the diverter roller 33 does not pass close to the gluing cylinder 31 and the layer of glue is not distributed on top of the crests of the waves of the respective canneté C1, C2. In the operating position, the diverter roller 33 exerts a light pressure on the cannetés C1, C2 on the cover side so as to bring the crests into contact with the gluing cylinder 31 which applies a uniform dose of adhesive substance.

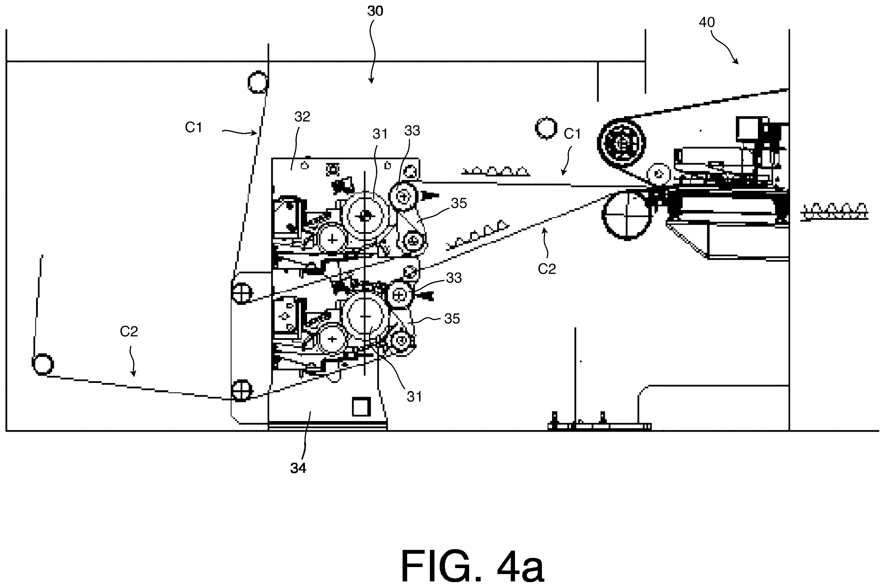

Figures 4a to 4d show some of the possible embodiments of the gluing device according to the present invention.

In Fig. 4a, in the first gluing device 32, the diverter roller 33 is in an operating position and the gluing cylinder 31 applies the glue onto the crests of the first cannet6 C1. Differently, in the second gluing device 34, the diverter roller 33 is in a rest position and the gluing cylinder 31 does not apply the glue onto the crests of the second cannet6 C2. According to this embodiment, the two cannetés C1, C2 are glued together, the crests of the second cannet6 C2 being coupled to the cover of the first canneté C1. Then the two cannetés C1, C2 are inserted into the double backer unit 40 in order to finalize the gluing operation and, once the laminated sheet has been applied in the laminating machine 50, so as to obtain a double-wave laminated corrugated cardboard.

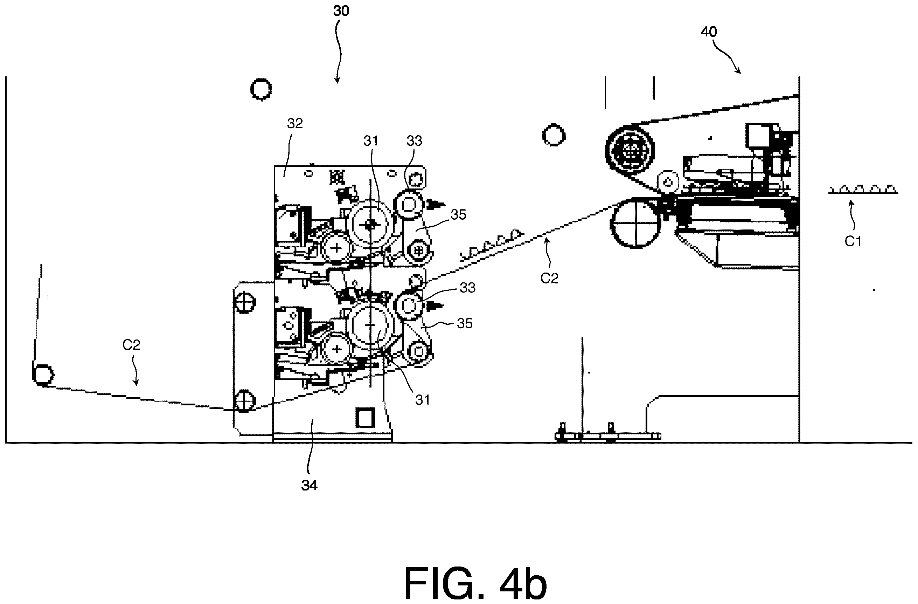

In Fig. 4b only the second canneté C2 is inserted in the gluing unit 30 and the diverter rollers 33 of both the gluing devices 32, 34 are in the rest position. According to this embodiment, once the laminated sheet has been applied to the second cannet6 C2 in the laminating machine 50, a single-wave laminated corrugated cardboard is obtained.

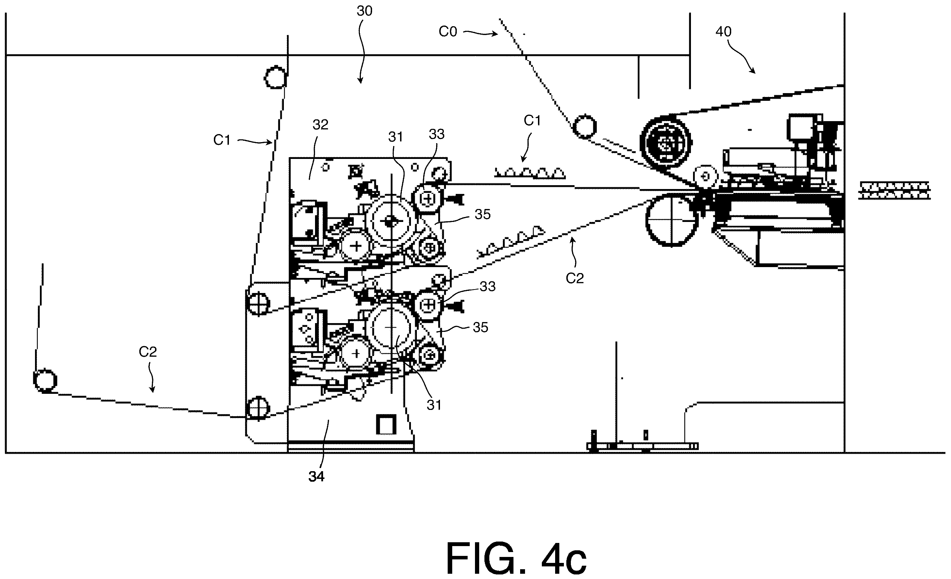

In Fig. 4c, in both the gluing devices 32, 34, the diverter roller 33 is in an operating position and the gluing roller 31 applies the glue onto the crests of the respective cannet6 C1, C2. According to this embodiment, the two cannetés C1, C2 are glued together, the crests of the second canneté C2 being coupled to the cover of the first cannet6 C1, and a cover C0 is glued to the first cannet6 C1, the crests of the first canneté C1 being coupled to the cover C0. Then all the paper layers are inserted into the double backer unit 40 in order to finalize gluing and obtain a double-wave corrugated cardboard web.

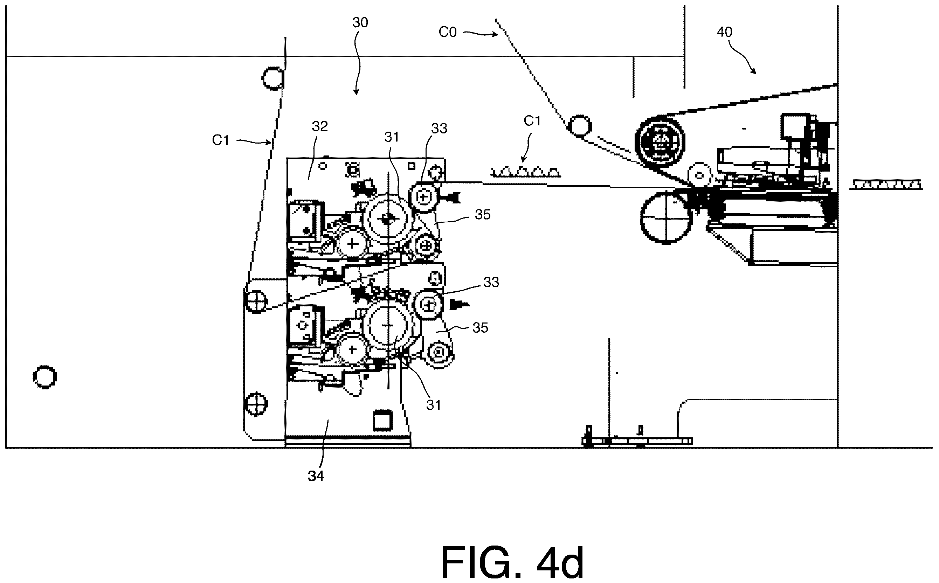

In Fig. 4d only the first cannet6 C1 is inserted in the gluing unit 30, and the diverter roller 33 of the first gluing device 32 is in the operating position, therefore the gluing cylinder 31 applies the glue onto the crests of the first cannet6 C1. According to this embodiment, a cover C0 is glued to the first cannet6 C1, with the crests of the first cannet6 C1 being coupled to the cover C0. Then all the paper layers are inserted into the double backer unit 40 in order to finalize gluing and obtain a single-wave corrugated cardboard web.

Obviously, it is possible to imagine other combinations of configurations of the gluing devices 32, 34, in addition to those described and illustrated above in the figures, without thereby departing from the scope of the present invention. For example, it is possible to provide a configuration, similar to that shown in Fig. 4b, in which only the first cannet6 C1 is inserted in the gluing unit 30. In this case also, once the laminated sheet has been applied to the first canneté C1 in the laminating machine 50, the plant may produce a single-wave laminated corrugated cardboard.

The configuration and/or the arrangement of the gluing unit 30 is such that at least one of the cannetés C1, C2, at least in an adjacent position downstream of the gluing unit 30 and upstream of the double backer unit 40, has the waves arranged upwardly.

The double backer unit 40 has the function of driving the web or webs of cannetés C1, C2 coming from the gluing unit 30, heating them gradually and completing the process of gluing them together and pushing them towards the laminating machine 50.

A double backer unit is a machine designed to favour the gluing together of two or more sheets of paper material. More particularly, a double backer unit is used to favour the gluing of a cover to a cannet6 in order to obtain a single-wave cardboard or to favour the gluing of a first canneté to a second canneté in order to obtain a double-wave cardboard. In other words, a double backer unit may be defined as being a device which is able to produce at least one corrugated cardboard web laminated on both sides by associating a corrugated cardboard web laminated on one side with a laminating sheet.

The double backer unit 40 according to the present invention may comprise two main parts: a first part, called hot section, designed to heat the parts to be glued so as to favour their adhesion; and a second part, called cold section, designed to move the corrugated cardboard, or the two cannetés, and keep the glued parts in contact with each other.

The hot section is formed by a support frame and by two metal plates, on which a canneté slides and which are made so as to ensure stability, easy sliding and uniform transfer of heat over the entire contact surface and therefore allow uniform gluing. Usually, these plates have an external temperature which is variable between 90° and 200°C depending on the type of cardboard to be produced and the action performed by the plates.

In detail, the plates can be divided up into a heating subset, designed to heat the sheets to be glued such as to improve the bonding capacity of the glue used, and a drying subset, designed to vaporize the excess water so as to obtain a correct moisture value of the corrugated cardboard.

The top part of the double backer unit performs the driving of the canneté or cannetés and exerts a predetermined pressure for favouring the gluing operation. It may consist of a mat guided by a transmission drum situated at the start of the double backer unit 40 and by a driving drum situated at the end of the double backer unit 40.

In order to ensure adequate pressure and, therefore, the correct gluing action, the force exerted on the mat may be adjusted by means of small pressure rollers, or shoes, which are cold or partially heated and designed to press the mat itself against the canneté.

From that indicated above it is clear that the laminating plant according to the present invention offers various alternatives as regards the final product such that the plant is particularly flexible and able to produce not only a double-wave laminated corrugated cardboard (Fig. 4a), but also various further types of product such as, for example, single-wave laminated corrugated cardboard (Fig. 4b), single-wave corrugated cardboard (Fig. 4d), and double-wave corrugated cardboard (Fig. 4c).

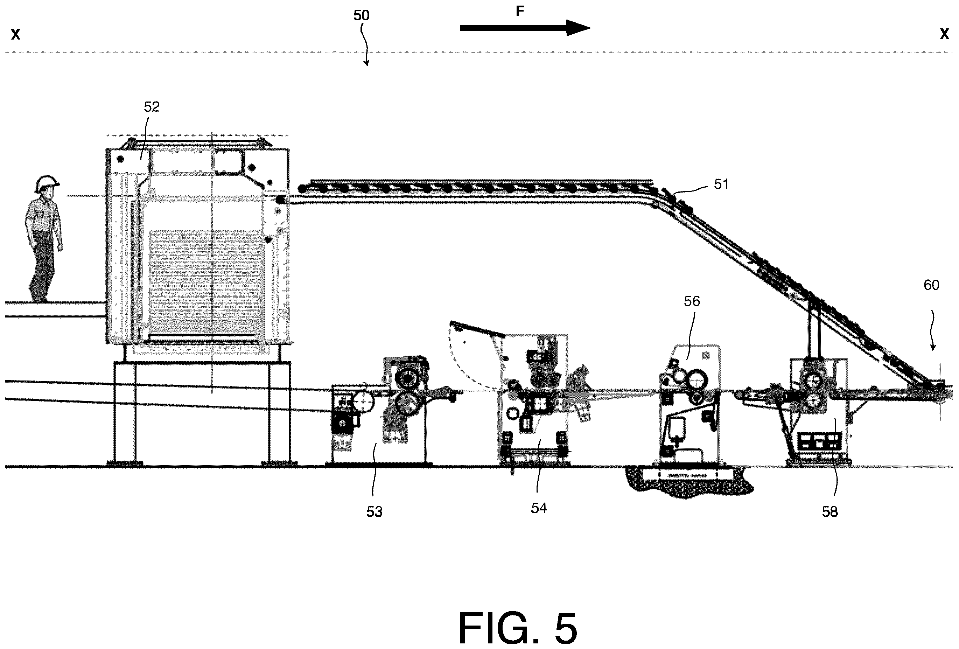

With particular reference to Figure 5, the in-line corrugated cardboard laminating plant 1 according to the present invention further comprises a laminating machine 50 arranged downstream the double baker unit 40 with respect to a direction of movement (F) along a longitudinal direction (X-X) in which the cannetés (C1, C2) are moved. The laminating machine 50 comprises a magazine 52 of laminated sheets 51, a vinyl gluer 56 and a coupling unit 60 for coupling the laminated sheets 51 to a corrugated cardboard.

The in-line laminating plant 1 further comprises a longitudinal cutting unit, or trimming unit 54, and a transverse cutting unit 58, arranged downstream the double baker unit 40 and upstream the coupling unit 60.

In the embodiment shown, the laminating machine 50 may also comprise a discarding unit 53 located upstream of the trimming unit 54 and designed to discard the cardboard considered unsuitable for lamination.

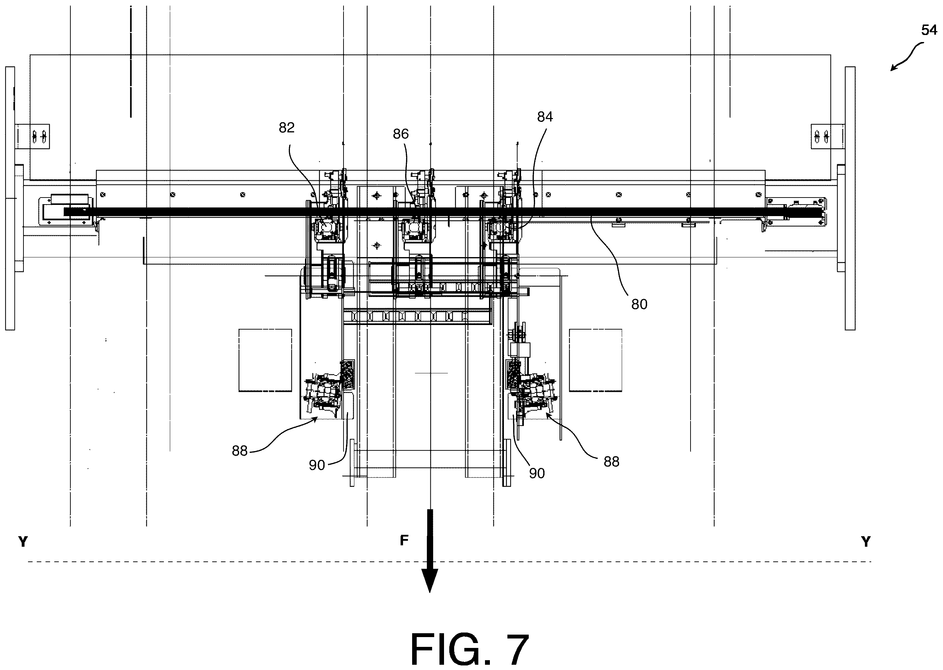

With particular reference to Figure 7, the longitudinal cutting unit 54, or trimming unit, has the function of trimming to predefined widths in a continuous manner a cannet6 C1, C2 (in the case of manufacture of a single-wave laminated corrugated cardboard) or trimming a pair of cannetés C1, C2 joined together and previously glued by means of the gluing unit 30 and the double backer unit 40 (in the case of manufacture of a double-wave laminated corrugated cardboard).

Its function is that of allowing continuous machining of the cardboard on which it performs, longitudinally with respect to advancing direction thereof, cuts which determine the width of the cardboards output from the laminating plant.

The trimming unit 54 comprises a beam 80 extending along a longitudinal direction Y-Y orthogonal to the longitudinal direction X-X along which the cannetés C1, C2 are moved. The trimming unit 54 also comprises at least one pair of side blades 82, 84 arranged movably along the beam 80.

According to a particularly advantageous feature, the side blades 82, 84 are configured so that the cut may be performed from above with the blade/counter-blade contrasting action by Teflon bars which are positioned on a beam located below the plane of sliding movement of the cardboard, thus ensuring a cut suitable for the corrugated cardboard, and even more suitable for cutting double-wave cardboard, owing to the rigidity offered by this type of cardboard which comprises at least four layers of corrugated and smooth paper which are glued together.

Each side blade 82, 84 is movable along the beam 80 independently of the other blade 82, 84 so as to be able to be positioned at the optimum cutting point. The working condition or rest condition of each blade is managed automatically and depends on the machining program.

According to one embodiment, the trimming unit 54 comprises a central blade 86.

Downstream of the trimming unit 54 there is a suction unit, in which two nozzles connected to a suction plant suck up the cardboard trimmings produced by the cutting blades of the trimming unit 54.

According to one of the embodiments of the present invention, the two side blades 82, 84 or further auxiliary blades 88, may be directly connected to, or arranged close to, suction nozzles 90 for sucking up the trimmings.

The transverse cutting unit 58 is suitable for cutting a canneté C1, C2 (in the case of manufacture of a single-wave corrugated cardboard) or cutting a pair of cannetés C1, C2 joined together and previously glued by means of the gluing machine 30 and the double backer unit 40 (in the case of manufacture of a double-wave laminated corrugated cardboard) so as to divide up the continuous cardboard web into cardboard sheets with a predetermined length. The transverse cutting unit 58 is arranged downstream of the vinyl gluer 56 and upstream of the coupling group 60 for coupling the laminated sheets 51.

The cardboard, after it has been cut to size, is transported by perforated belts with a vacuum sealing system to the coupling unit 60 and coupled there to a laminated sheet 51.

Therefore, the in-line laminating plant according to the present invention produces single-wave or double-wave continuous cardboard webs, but couples cardboards in the form of sheets to the laminated sheets 51 in the coupling unit 60. This feature is essential for obtaining very precise coupling together between the cardboard and the laminated sheet, which is usually printed, and therefore ensuring a high quality of the finished product.

The advantages obtained by the present invention are therefore clear. The laminating machine 50 comprises a single trimming cutting unit 54, instead of two trimming cutting units, and associated systems for removal of the material, which are present in the laminating machines of the prior art. Furthermore, the laminating machine does not require, and therefore does not comprise, two paper alignment systems, as instead are present in the laminating machines of the prior art. Finally, the laminating machine 50 comprises a single vinyl gluer 56 differently from the laminating machines of the prior art.

Owing to this configuration described above it is possible to obtain a paper passage layout which is shorter and reduce the waste material at each new start-up of the plant.

A further advantage of the present invention consists in the fact that the longitudinal cut, or trim, is performed on a pair of cannetés which have already been glued together in an upstream zone of the plant and therefore are firmly fixed together. In this way it is possible to avoid all the possible problems which are encountered in the plants of the known type. where the cannetés are glued in the laminating machine and must be realigned with each other after gluing and before being coupled with the laminated sheet.

Moreover, it should be pointed out that, as well as reducing the production difficulties present during the machining process performed with the in-line laminators of the prior art, the proposed solution allows a higher quality and less costly laminated product to be obtained.

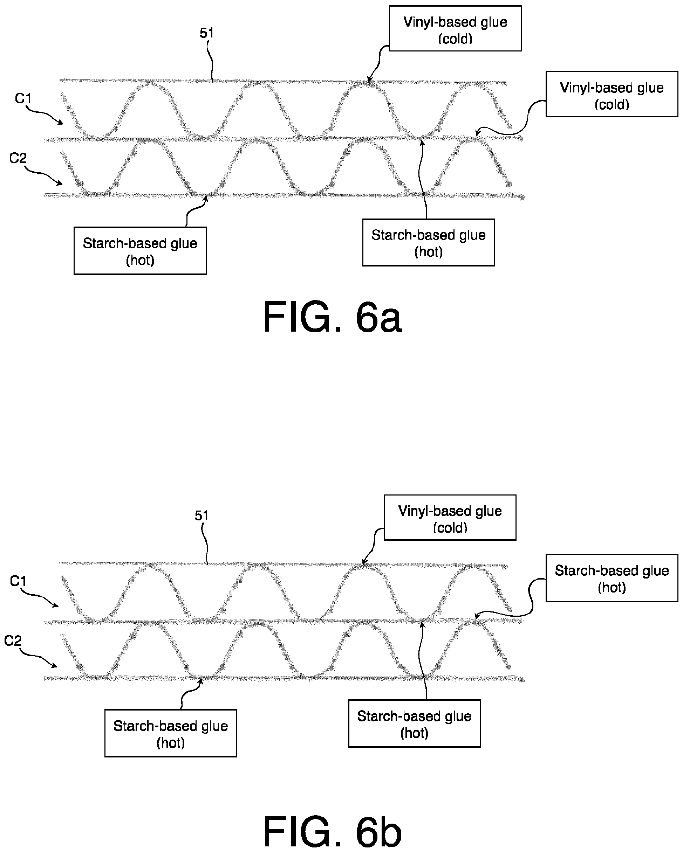

The product of a conventional in-line laminator is in fact composed, as shown in Figure 6a, of two cold-glued paper layers and two hot-glued layers. The product realized with the solution according to present invention is instead composed, as shown in Figure 6b, by one cold-glued paper layer and three hot-glued layers.

## Claims

1. An in-line corrugated cardboard laminating plant comprises:
- a first corrugating group (10), comprising a corrugator (12) and a plurality of continuous paper web magazines (14, 16), adapted to form a first cannet6 (C1),
- a second corrugating group (20), comprising a corrugator (22) and a plurality of continuous paper web magazines (24, 26), adapted to form a second cannet6 (C2),
- a laminating machine (50) comprising a magazine (52) of laminated sheets (51) and a coupling unit (60) for coupling the laminated sheets (51), adapted to couple the laminated sheets (51) to one or more of the cannetés (C1, C2) so as to form a laminated corrugated cardboard,
**characterized in that** the plant comprises a gluing unit (30) and a double backer unit (40) arranged downstream of the two corrugating groups (10, 20) and upstream of the laminating machine (50) with respect to a direction of movement (F) along a longitudinal direction (X-X) in which the cannetés (C1, C2) are moved.

2. The plant according to claim 1, **characterized in that** the gluing unit (30) is arranged upstream of the double backer unit (40).

3. The plant according to claim 2, **characterized in that** the corrugating groups (10, 20) are configured and/or arranged such that at least one of the cannetés (C1, C2), at least in an adjacent position upstream of the gluing unit (30), has waves arranged upwardly.

4. The plant according to claim 2, **characterized in that** the gluing unit (30) is configured and/or arranged such that at least one of the cannetés (C1, C2), at least in an adjacent position downstream of the gluing unit (30), and upstream of the double backer unit (40), has waves arranged upwardly.

5. The plant according to claim 2, **characterized in that** the gluing unit (30) comprises a starch-based glue reservoir.

6. The plant according to claim 4, **characterized in that** the gluing unit (30) comprises two gluing devices (32, 34) each comprising a gluing cylinder (31) and a diverter roller (33) engaged movably with the gluing device (32, 34) such that the diverter roller (33) is selectively movable towards and away from the gluing cylinder (31).

7. The plant according to claim 1, **characterized in that** the laminating machine (50) further comprises a transverse cutting unit (58), arranged upstream of the coupling unit (60) for coupling the laminated sheets (51), adapted to cut transversely a canneté (C1, C2), or to cut a pair of cannetés (C1, C2) coupled together and previously glued by means of the gluing unit (30) and the double backer unit (40).

8. The plant according to claim 7, **characterized in that** the laminating machine (50) comprises a longitudinal cutting unit (54) and a vinyl gluer (56) arranged upstream of the coupling unit (60) for coupling the laminated sheets (51).

9. The plant according to claim 8, **characterized in that** the longitudinal cutting unit (54) comprises at least one pair of side blades (82, 84) disposed movably along a beam (80) extending along a longitudinal direction (Y-Y) orthogonal to the longitudinal direction (X-X) along which the cannetés C1, C2 are moved.

10. The plant according to claim 1, **characterized in that** it comprises a cover magazine (100), said magazine (100) being arranged in an elevated position relative to the other units of the laminating plant (1).
